# EUROPÄISCHE PATENTSCHRIFT

(11) **EP 3 628 782 B1**
(45) Veröffentlichungstag und Bekanntmachung des Hinweises auf die Patenterteilung: **24.11.2021**
(21) Anmeldenummer: 19197701.6
(22) Anmeldetag: 17.09.2019
(51) Int. Cl.: E02D 33/00

(54) **VERFAHREN ZUR HERSTELLUNG EINES SPITZENDRUCKFREIEN TIEFGRÜNDUNGSELEMENTS**
METHOD FOR PRODUCING A FOUNDATION ELEMENT FREE OF PEAK PRESSURE
PROCÉDÉ DE FABRICATION D'UN ÉLÉMENT DE FONDATION SANS PRESSION DE POINTE

(30) Priorität: 26.09.2018 DE 102018123794
(43) Veröffentlichungstag der Anmeldung: 01.04.2020
(73) Patentinhaber: Keller Holding GmbH, 63067 Offenbach/Main (DE)
(72) Erfinder: Bubenicek, Michal, 10900 Prag 10 (CZ)
(74) Vertreter: Neumann Müller Oberwalleney & Partner Patentanwälte

(56) Entgegenhaltungen:
- EP-A1- 3 118 376
- DE-A1- 3 033 715
- DE-A1-102006 007 144
- "Optimierung und Erweiterungder Parallel-Seismik-Methodezur Bestimmung der Länge vonFundamentpfählen", , 19 September 2010 (2010-09-19), Retrieved from the Internet: URL:https://d-nb.info/1122647956/34 [retrieved on 2020-06-16]

## Beschreibung

Die vorliegende Erfindung betrifft ein Verfahren zur Herstellung eines spitzendruckfreien Tiefgründungselements.

Fundamente von Bauwerken bestehen aus Bauelementen für den Grundbau, wie Platten, Trägern, Steinen oder Tiefgründungselementen. Die Tiefgründungselemente sind dabei häufig pfahlförmig ausgestaltet und nehmen in diesem Fall die Last der Bauwerke an dem vertikal oberen Ende des Tiefgründungselementes, dem Säulenkopf, auf und übertragen diese in das Erdreich, das auch als Baugrund bezeichnet werden kann. Dies erfolgt einerseits durch den Spitzendruck, der durch die Auflage des vertikal unteren Endes des Tiefgründungselementes, dem Säulenfuß, im Erdboden resultiert. Andererseits wird die Last aus dem Bauwerk über die Mantelreibung zwischen dem Erdreich und der Mantelfläche des Tiefgründungselementes aufgenommen.

Das Verhältnis der beiden Widerstandsanteile Spitzendruck und Mantelreibung hängt dabei maßgeblich von der Beschaffenheit des Erdreiches ab. Um die Tragfähigkeit von Tiefgründungselementen exakt bestimmen zu können, ist es notwendig, dass der Spitzendruck und die Mantelreibung voneinander getrennt ermittelt werden.

Aus der DE 34 24 776 A1 ist ein Verfahren zur Ermittlung der Tragfähigkeit von Pfählen bekannt, bei dem der Pfahl in einen oberen und einen unteren Abschnitt unterteilt wird. Zwischen dem oberen Abschnitt und dem unteren Abschnitt wird eine Presse und an der Pfahlsohle eine Kraftmesszelle vorgesehen. Die Unterteilung des Pfahles wird dabei so gewählt, dass die Summe der Mantelreibung des oberen Pfahlabschnittes und dessen Gewicht dem Betrag nach gleich der Summe aus der Mantelreibung des unteren Pfahlabschnittes und dem Spitzendruck sind. Durch Messen der Pressenkraft sowie des Spitzendrucks mittels der Kraftmesszelle an der Pfahlsohle lassen sich alle Widerstandsanteile rechnerisch bestimmen.

Aus der DE 10 2006 007 144 A1 ist ein Pfahlhubkissen zur Messung der Belastbarkeit eines Bohrpfahls bekannt, das als ringförmiger Faltenbalg ausgestaltet und zwischen dem oberen und dem unteren Pfahlteil angeordnet ist. Durch Aufpumpen des Pfahlhubkissens mit einer Flüssigkeit können der obere und der untere Pfahlteil verschoben werden, sodass aus den resultierenden Verschiebungen und dem Druck im Pfahlhubkissen die Mantelreibung bestimmt werden kann. Weitere Pfahlgründungsmöglichkeiten sind in DE3033715A1 und EP3118376A1 offenbart.

Aus der gattungsbildenden Veröffentlichung "Optimierung und Erweiterung der Parallel-Seismik-Methode zur Bestimmung der Länge von Fundamentpfählen", Dipl.-Geo-phys. Ernst Niederleithinger, BAM-Dissertationsreihe, Band 70, Berlin 2011 ist ein Bauwerk mit einer Fundamentplatte bekannt, das über mehrere Pfähle in einem Baugrund mit ausreichender Mantelreibung abgestützt ist.

Der vorliegenden Erfindung liegt die Aufgabe zugrunde, ein Verfahren bereitzustellen, mit dem ein Tiefgründungselement ohne Spitzendrücke einfach und kosteneffizient hergestellt werden kann.

Zur Lösung der Aufgabe wird ein Verfahren gemäß Anspruch 1 zur Herstellung eines spitzendruckfreien Tiefgründungselementes vorgeschlagen, umfassend die Schritte: Einbringen eines wasserlöslichen Materials in ein Erdreich und Einbringen eines Tiefgründungselementes in das Erdreich auf dem wasserlöslichen Material, wobei das Tiefgründungselement nach dem Einbringen temporär auf dem wasserlöslichen Material nach unten abgestützt und durch Lösen des wasserlöslichen Materials nur noch durch die Mantelreibung getragen und am unteren Ende spitzendruckfrei wird.

Durch die Löslichkeit des in das Erdreich eingebrachten Materials löst sich dieses in einem feuchten Baugrund mit fortschreitender Zeit auf, sodass unterhalb des Bauelementes, in dem Bereich, in dem das wasserlösliche Material eingebracht wurde, eine leere beziehungsweise flüssigkeitsgefüllte Kammer entsteht. Das Bauelement wird somit nur noch durch die Mantelreibung getragen und ein Spitzendruck wirkt nicht mehr auf das Bauelement ein. Insofern eignet sich das Verfahren besonders gut zum Ermitteln der Mantelreibung von Bauelementen und/oder für Bauwerke, die keinen lasteintragenden Einfluss in darunter liegende Bodenbereiche haben sollen. Als Bauelement kann prinzipiell jedes Element in den Boden eingebracht werden, bei dem nach dem Einbringen eine Mantelreibung mit dem anstehenden Erdreich ausbildet ist. Insbesondere kann eine Mantelfläche des Bauelements nach dem Einbringen mit dem Erdreich in Kontakt sein.

Das erfindungsgemäße Verfahren weist den Vorteil auf, dass für die Messung der gesamten Mantelreibung keine Messvorrichtung in dem Bauelement selbst oder im Baugrund verbleiben muss, nachdem die Messung der Mantelreibung abgeschlossen wurde. Des Weiteren lässt sich das Einbringen des wasserlöslichen Materials in den Baugrund in die bekannten Verfahren zur Herstellung eines Bauelementes für den Grundbau integrieren, ohne dass ein Grundbearbeitungswerkzeug, während des Einarbeiten des Gründungsloches, zusätzlich in den Boden eingefahren werden muss. Ferner kann das Verfahren für die Herstellung von Bauelementen verwendet werden, die oberhalb eines untertage bestehenden Bauwerks, beispielsweise Tunnel, errichtet werden, auf das keine weiteren Lasten direkt übertragen werden sollen. Durch die resultierende leere Kammer zwischen dem Bauelement und dem Bauwerk können somit beispielsweise Schwingungen nicht direkt vom Bauwerk auf das Bauelement und umgekehrt übertragen werden. Das erfindungsgemäße Verfahren kann für die Herstellung von Bauelementen verwendet werden, deren Säulenfuß sowohl oberhalb als auch unterhalb des Grundwasserspiegels angeordnet wird. Des Weiteren kann das erfindungsgemäße Verfahren sowohl für Bauelemente mit Bewehrung als auch für Bauelemente ohne Bewehrung verwendet werden.

Das wasserlösliche Material wird unterhalb einer gewünschten Endtiefe des herzustellenden Bauelementes in den Boden eingebracht. Nach dem Einbringen des wasserlöslichen Materials wird das Bauelement hierauf erstellt, sodass dieses nach dem Einbringen temporär auf dem wasserlöslichen Material nach unten abgestützt ist. Im Rahmen der vorliegenden Offenbarung soll wasserlösliches Material begrifflich solches Material mit umfassen, das zunächst in einem tragfähigen, insbesondere festem Zustand ist, um das hierauf angeordnete Bauelement temporär abzustützen, und im Erdreich selbstständig unter Einwirkung von Flüssigkeit und/oder Temperaturänderung lösbar beziehungsweise verflüssigbar ist, so dass die endseitige Abstützung des Bauelements zu einem späteren Zeitpunkt aufgehoben wird. Das Bauelement wird dann nur noch durch die Mantelreibung getragen und ist am unteren Ende spitzendruckfrei.

Die Verwendung von wasserlöslichem Material hat den Vorteil, dass sich das Material in feuchten Böden von selbst löst.

Als wasserlösliches Material kann in einer möglichen Ausführungsform des Verfahrens ein Material mit einer Löslichkeit in Wasser von zumindest 33g/l Wasser, insbesondere von zumindest 100g/l Wasser, gewählt werden. Hierdurch wird sichergestellt, dass sich das wasserlösliche Material in der vorhandenen Feuchte in dem Erdreich lösen kann und eine leere Kammer unterhalb des Bauelementes innerhalb eines für die Herstellung von Bauelementen gängigen Zeitraums erzeugt wird.

In einer weiteren möglichen Ausführungsform des Verfahrens kann dem wasserlöslichen Material vor und/oder nach dem Einbringen des Bauelementes eine Flüssigkeit, insbesondere Wasser beigemengt werden, beispielsweise mittels Gießen, Schlauch, Leitung oder Lanze. Das Beimengen der Flüssigkeit kann insbesondere derart erfolgen, dass Hohlräume des wasserlöslichen Materials mit der Flüssigkeit ausgefüllt werden. Das Verfahren kann somit auch in Bereichen mit sehr geringer Bodenfeuchte, insbesondere in Bereichen mit sehr niedrigem Grundwasserspiegel, angewendet und das Auflösen des wasserlöslichen Materials trotz der geringen Bodenfeuchte in einem ausreichend kleinen Zeitraum sichergestellt werden.

Das wasserlösliche Material ist vorzugsweise ein Feststoff. Das wasserlösliche Material kann in einer möglichen Ausführungsform des Verfahrens aus der Gruppe der Salze, der Gruppe der Zuckerarten, der Gruppe der Säuren oder Kombinationen hiervon gewählt werden und/oder kann zumindest eines von Zellstoff und einer gefrorenen Flüssigkeit enthalten. Insbesondere kann als wasserlösliches Material aus der Gruppe der Salze Steinsalz verwendet werden. Aus der Gruppe der Säuren kann insbesondere Kaliumchlorid oder Kaliumsulfat als wasserlösliches Material verwendet werden. Darüber hinaus kann dem wasserlöslichen Material zumindest eines der Mikroelemente Zink, Mangan, Eisen, Selen und Kupfer beigemengt werden, um die Löslichkeit in Wasser zu erhöhen.

Alternativ oder ergänzend kann die Löslichkeit des Materials auch dadurch verbessert werden, dass das wasserlösliche Material in mehreren Schichten in den Boden eingebracht wird, wobei auf eine Schicht mit wasserlöslichem Material eine Zwischenschicht aus flüssigkeitsdurchlässigem, unlöslichem beziehungsweise rolligem Material eingebracht werden kann. Auf die durchlässige Zwischenschicht, die auch als Einlage bezeichnet werden kann, kann anschließend wieder eine Schicht aus wasserlöslichem Material eingebracht werden. Durch eine wasserdurchlässige Einlage kann Grundwasser fließen, sodass hierzu benachbarten Schichten aus löslichem Material von mehreren Seiten mit Wasser gesättigt werden und die Auflösezeit verringert wird. Als Zwischenschicht wird vorzugsweise rolliges beziehungsweise kerniges Material verwendet, wie beispielsweise Kies. Dadurch kann auch weniger wasserlösliches Material eingebracht werden. Es ist weiterhin denkbar, dass ein Material für die Zwischenschicht eine große Absorption einer Flüssigkeit aufweist. Es kann zum späteren Zeitpunkt die vor dem Einbringen absorbierte Flüssigkeit in das wasserlösliche Material abgeben. Es können beliebige Zwischenschichten und Schichten aus wasserlöslichen Material zur Herstellung eines Hohlraums kombiniert eingesetzt werden.

Nach einer alternativen oder ergänzenden Ausführungsform kann das wasserlösliche Material eine gefrorene Flüssigkeit, insbesondere gefrorenes Wasser enthalten, insbesondere in Form von Eiswürfeln. Hierbei soll als Löslichkeit im Sinne der vorliegenden Erfindung auch der Übergang der Flüssigkeit beim Auftauen vom festen Aggregatzustand im gefrorenen Zustand in den flüssigen Aggregatzustand verstanden werden. Es versteht sich, dass auch Kombinationen der genannten Ausführungsformen möglich sind, beispielsweise die Verwendung eines löslichen Materials aus der Gruppe der Salze, der Gruppe der Zuckerarten oder der Gruppe der Säuren, und die Verwendung einer Zwischenschicht aus Eiswürfeln.

In einer möglichen Ausführungsform des Verfahrens kann als wasserlösliches Material ein Material, das im vollständig in Wasser gelösten Zustand einen pH-Wert von zumindest 6,0, insbesondere von zumindest 6,5, insbesondere von zumindest 6,8, und maximal 8,0, insbesondere maximal 7,5, insbesondere maximal 7,2, aufweist, gewählt werden. Somit kann sichergestellt werden, dass das Einbringen des wasserlöslichen Materials in das Erdreich keine wesentliche Veränderung des pH-Wertes des Erdreiches selbst oder des Grundwassers verursacht.

In einer weiteren möglichen Ausführungsform des Verfahrens kann nach dem Einbringen des Bauelementes eine Ruhezeit eingehalten werden, bevor auf das Bauelement eine signifikante äußere Belastung aufgebracht wird. Während der Ruhezeit löst sich das wasserlösliche Material zumindest teilweise auf, sodass unter dem Bauelement ein Hohlraum entsteht. Als signifikante äußere Belastung soll dabei verstanden werden, dass das Bauelement mit mehr als 10 % der Tragfähigkeit des Bauelementes im fertig gestellten Zustand belastet wird. Die Ruhezeit hängt von diversen Faktoren ab, wie der Wahl des wasserlöslichen Materials, Einbringen des Materials in ein oder mehr Schichten, Bodenbeschaffenheit, etc. Insofern kann die Ruhezeit in Abhängigkeit der Löslichkeit des wasserlöslichen Materials und/oder eines Feuchtegehaltes des Erdreiches und/oder der Beschaffenheit des Bauelementes nach Bedarf eingestellt werden. Als Ruhezeit können zumindest 4 Tage, insbesondere zumindest 10 Tage, insbesondere zumindest 20 Tage, insbesondere zumindest 25 Tage und/oder bis zu 28 Tage, gewählt werden, wobei bei Verwendung von Eiswürfeln als löslichem Material auch kürzere Zeiten möglich sind. Durch das Einhalten der Ruhezeit kann sichergestellt werden, dass das Lösen des wasserlöslichen Materials in der Feuchte des Erdreiches am Ende der Ruhezeit derart weit fortgeschritten ist, dass beim Aufbringen der Belastung ein Auffliegen des Bauelementfußes auf einem Rest des wasserlöslichen Materials und ein Verfälschen der Messung der Mantelreibung ausgeschlossen werden kann. Insbesondere kann es ausreichen, dass innerhalb der Ruhezeit rund 50 % des Volumens des wasserlöslichen Materials gelöst beziehungsweise verflüssigt werden. In diesem Fall ist die Ruhezeit kürzer als eine Auflösezeit des wasserlöslichen Materials, in der sich das wasserlösliche Material vollständig lösen kann.

Des Weiteren kann vor oder während des Einbringens des Bauelementes das wasserlösliche Material verdichtet werden. Das Verdichten kann insbesondere derart erfolgen, dass die Festigkeit und/oder die Steifigkeit des wasserlöslichen Materials zumindest dem Produkt aus der Höhe des Bauelementes und dem spezifischen Gewicht des Bauelementes unmittelbar nach dem Einbringen des Bauelementes entspricht. Das wasserlösliche Material wird somit unter dem Druck des Bauelementes direkt nach dem Einbringen des Bauelementes nicht nachgeben, sodass eine exakte vertikale Positionierung des Bauelementes innerhalb des Bodens gewährleistet ist.

Das wasserlösliche Material kann zudem in einer weiteren möglichen Ausführungsform des Verfahrens derart verdichtet werden, dass eine Breite des wasserlöslichen Materials gleich oder größer ist als eine Breite des darauf zu erstellenden Bauelementes. Es wird somit sichergestellt, dass der Fuß des Bauelementes direkt nach dem Einbringen des Bauelementes vollständig auf dem wasserlöslichen Material aufliegt. Nach dem Auflösen des wasserlöslichen Materials wirkt somit kein Spitzendruck mehr auf den Fuß des Bauelementes ein. Es wird zudem verhindert, dass das Bauelement seinerseits einen ringförmigen Fuß ausbildet, der gegenüber der restlichen Breite des Bauelementes oder dem Positionierungselement aufgeweitet ist und somit eine Auflagefläche bildet, auf den ein Spitzendruck einwirken kann.

In einer weiteren möglichen Ausführungsform des Verfahrens kann das wasserlösliche Material auch derart verdichtet werden, dass eine Höhe des wasserlöslichen Materials maximal der einfachen Breite des Bauelementes, insbesondere maximal der halben Breite des Bauelementes, entspricht. Dieses Vorgehen ermöglicht, dass einerseits ein ausreichend großer Hohlraum unterhalb des Bauelementes gebildet wird und andererseits eine möglichst geringe Menge des wasserlöslichen Materials in das Erdreich eingebracht werden muss.

In einer weiteren Ausführungsform des Verfahrens kann nach dem Einbringen des Bauelementes die Mantelreibung des Bauelementes bestimmt werden. Dies kann durch die gängigen Verfahren zur Bestimmung der Mantelreibung erfolgen, insbesondere durch das Aufbringen einer Kraft am Kopf des Bauelementes über eine hydraulische Presse oder einen Rammschlag in Richtung einer Längsachse des Bauelementes.

In einer Weiterbildung des Verfahrens kann neben dem erfindungsgemäß hergestellten Bauelement ein weiteres Bauelement in das Erdreich eingebracht werden, wobei das weitere Bauelement gleiche Abmessungen wie das Bauelement aufweist und derart in das Erdreich eingebracht wird, dass von dem Erdreich ein Spitzendruck auf das weitere Bauelement wirkt. Nach dem Einbringen des weiteren Bauelements kann der Gesamtwiderstand des weiteren Bauelements bestimmt werden. Aus dem Gesamtwiderstand des weiteren Bauelementes und der Mantelreibung des Bauelementes kann der Spitzendruckwiderstand des weiteren Bauelementes ermittelt werden. Der Abstand des weiteren Bauelements von dem Bauelement kann dabei maximal so groß gewählt werden, dass das weitere Bauelement in einen Teil des Erdreichs eingebracht wird, dessen Charakteristik mit dem Teil des Erdreiches, in den das Bauelement eingebracht wurde, vergleichbar ist. Es ist denkbar, dass auch eine Gruppe von mehr als einem Bauelement auf einmal belastet werden kann und daher eine gesamte Tragfähigkeit der Gruppe bestimmt werden kann.

In einer Ausführungsform des Verfahrens kann das Einbringen des wasserlöslichen Materials in das Erdreich und das Einbringen des Bauelementes auf dem wasserlöslichen Material durch ein Rüttelverfahren erfolgen. Hierbei wird mittels eines Tiefenrüttlers beziehungsweise Aufsatzrüttlers ein Gründungsloch in das Erdreich eingearbeitet. Das wasserlösliche Material wird über eine Schleuse an der Spitze des Rüttlers in das Gründungsloch eingebracht und im Gründungsloch von dem Rüttler verdichtet. Das Bauelement kann bei Verwendung von schüttfähigem oder fließfähigem beziehungsweise rolligem Baumaterial nachfolgend ebenfalls durch die Schleuse des Rüttlers, beispielsweise in Form von Zement, Beton, Mörtel, Schotter oder Kies, auf das wasserlösliche Material eingebracht werden. Alternativ kann auch ein vorgefertigtes Bauelement, wie beispielsweise ein Pfahl aus Stahlbeton oder aus Holz oder ein Stahlrohr mit offenem oder geschlossenem Fuß, bis zum Erreichen des lösbaren Materials in das Erdreich eingepresst werden.

In einer weiteren Ausführungsform des Verfahrens kann das Einbringen des wasserlöslichen Materials in das Erdreich und das Einbringen des Bauelementes auf dem wasserlöslichen Material durch ein Vortriebsrohrverfahren erfolgen. Hierbei wird ein Vortriebsrohr in das Erdreich vorgetrieben, eingepresst bzw. gerammt, sodass ein Gründungsloch in das Erdreich eingearbeitet wird. Nach dem Erreichen einer Solltiefe wird das untere Ende des Vortriebsrohres geöffnet, beispielsweise durch Kappen des Kopfendes oder Öffnen einer Schleuse. Das Vortriebsrohr wird aus dem Erdreich herausgezogen. Parallel hierzu werden zunächst das wasserlösliche Material und nachfolgend das Gründungsmaterial durch das untere Ende des Vortriebsrohres in das Gründungsloch eingebracht.

In einer weiteren möglichen Ausführungsform des Verfahrens kann das Einbringen des wasserlöslichen Materials in das Erdreich und das Einbringen des Bauelementes auf dem wasserlöslichen Material in ein durch ein Bohrverfahren erzeugtes Bohrloch erfolgen. Hierbei wird ein Bohrwerkzeug in das Erdreich abgeteuft und nach Erreichen der Endposition wieder aus dem Erdreich herausgezogen. Das so entstehende Bohrloch kann während des Abteufens oder nach dem Herausziehen des Bohrwerkzeuges durch ein Stützrohr oder eine Stützflüssigkeit gesichert werden. Nachfolgend kann das Bauelement in das Bohrloch eingebracht werden.

In einer weiteren möglichen Ausführungsform des Verfahrens kann ein Gründungsloch in das Erdreich eingearbeitet werden und das wasserlösliche Material als ein lösliches Positionierungselement von einem Boden des Gründungsloches bis zu einer Sollfüllhöhe eingefüllt werden. Hierdurch kann das Bauelement in einer definierten Höhe innerhalb des Gründungsloches positioniert werden. Zudem kann ein ausreichend großer Hohlraum unterhalb des Bauelementes nach dem Auflösen des wasserlöslichen Materials sichergestellt werden.

Das erfindungsgemäße Verfahren kann analog für weitere vollverdrängende Verfahren, beispielsweise Stopfsäulen, für teilverdrängende Verfahren und deren Kombinationen, zum Beispiel Teilverdrängungsbohrpfähle, für Bohrverfahren und für Mikropfähle angewendet werden.

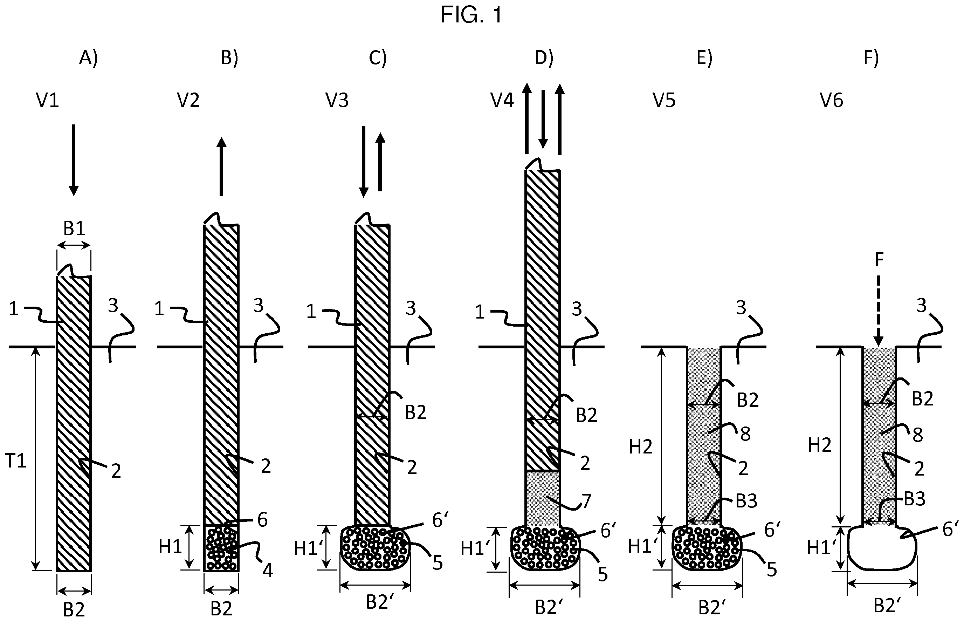

In den folgenden Figurendarstellungen werden bevorzugte Ausführungsformen des erfindungsgemäßen Verfahrens beschrieben. Dabei zeigt
- Figur 1: ein erfindungsgemäßes Verfahren zur Herstellung eines spitzendruckfreien Bauelementes in einer ersten Ausführungsform, A) nach dem Abteufen einer Einfüllvorrichtung, B) nach dem Einbringen von wasserlöslichem Material in den Boden, C) nach dem Verdichten des wasserlöslichen Materials, D) während des Einbringens des Bauelementes auf dem wasserlöslichen Material, E) nach dem Herstellen des Bauelementes, F) nach dem Auflösen des wasserlöslichen Materials;

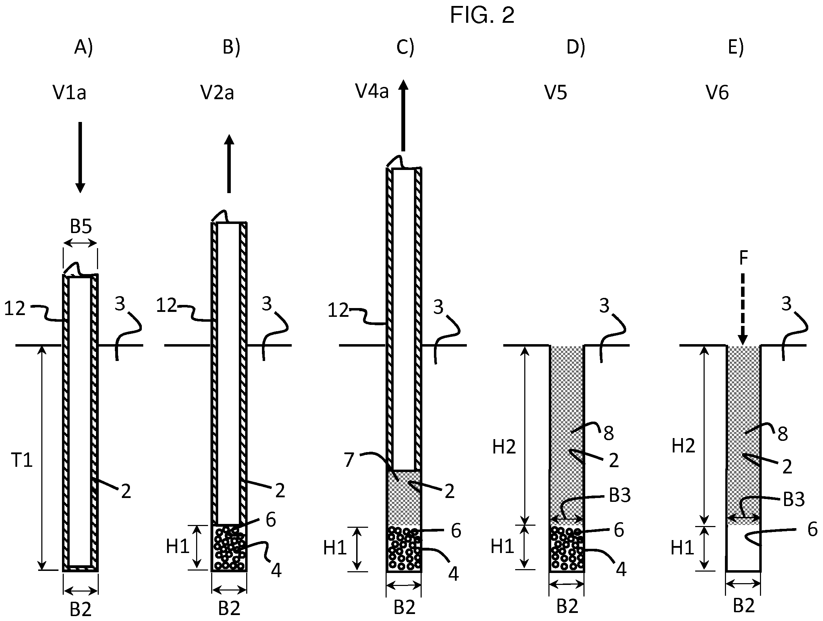

- Figur 2: ein erfindungsgemäßes Verfahren zur Herstellung eines spitzendruckfreien Bauelementes in einer zweiten Ausführungsform, A) nach dem Abteufen einer Einfüllvorrichtung, B) nach dem Einbringen von wasserlöslichem Material in den Boden, C) während des Einbringens des Bauelementes auf dem wasserlöslichen Material, D) nach dem Herstellen des Bauelementes, E) nach dem Auflösen des wasserlöslichen Materials;

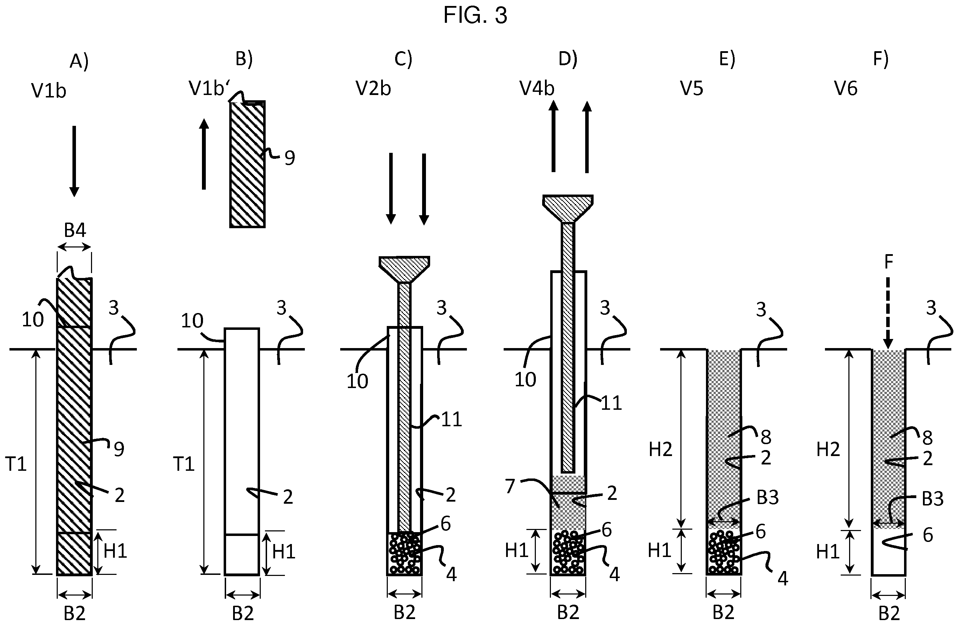

- Figur 3: ein erfindungsgemäßes Verfahren zur Herstellung eines spitzendruckfreien Bauelementes in einer dritten Ausführungsform, A) nach dem Abteufen eines Bohrwerkzeuges, B) nach dem Entfernen des Bohrwerkzeuges, C) nach dem Einbringen von wasserlöslichem Material in den Boden, D) während des Einbringens des Bauelementes auf dem wasserlöslichen Material, E) nach dem Herstellen des Bauelementes, F) nach dem Auflösen des wasserlöslichen Materials; und

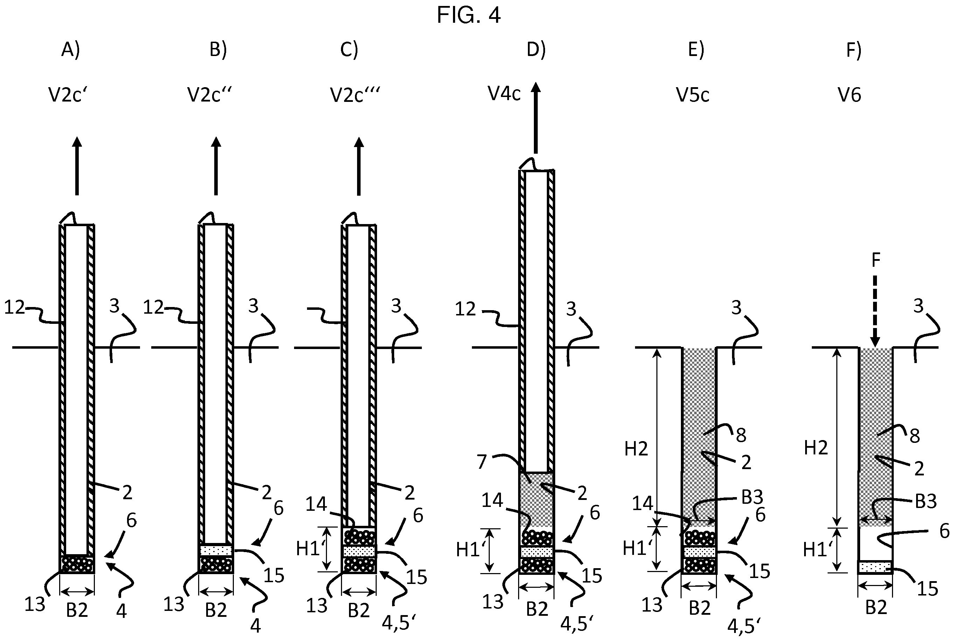

- Figur 4: ein erfindungsgemäßes Verfahren zur Herstellung eines spitzendruckfreien Bauelementes in einer vierten Ausführungsform, A) nach dem Einbringen einer ersten Schicht wasserlöslichen Materials in den Boden, B) nach dem Einbringen einer Zwischenschicht aus wasserdurchlässigem Material über der ersten Schicht wasserlöslichen Materials in den Boden, C) nach dem Einbringen einer zweiten Schicht wasserlöslichen Materials auf der Einlage aus wasserdurchlässigem Material in den Boden, D) während des Einbringens des Bauelementes auf dem wasserlöslichen Positionierungselement, nach dem Herstellen des E) Bauelementes, F) nach dem Auflösen des wasserlöslichen Materials.

Eine erste Ausführungsform des erfindungsgemäßen Verfahrens wird in den Figuren 1A bis 1F, die im Folgenden gemeinsam beschrieben werden, dargestellt. In dem ersten Prozessschritt V1 des erfindungsgemäßen Verfahrens wird mit einem Bodenverdränger 1, beispielsweise einem Tiefenrüttler, ein Gründungsloch 2 in ein Erdreich 3 eingearbeitet. Das Gründungsloch 2 weist dabei eine Solltiefe T1 auf. Die Breite B2 des Gründungslochs 2 entspricht im dargestellten Fall weitgehend der Breite B1 des Bodenverdrängers 1. Es ist auch denkbar, insbesondere falls als Bodenverdränger 1 ein Tiefenrüttler eingesetzt wird, dass die Breite B2 des Gründungslochs 2 größer als die Breite B1 des Bodenverdrängers 1 ist. Der Bodenverdränger kann auch in Form eines Rohres ausgebildet sein.

Nachdem die Solltiefe T1 von dem Bodenverdränger 1 erreicht wurde, wird in einemzweiten Prozessschritt V2 der Bodenverdränger 1 um die Soll-Füllhöhe H1 aus dem Erdreich 3 herausbewegt. Parallel hierzu wird durch eine nicht dargestellte Schleuse am Kopf des Bodenverdrängers 1 ein wasserlösliches Material 4, wie beispielsweise Steinsalz und/oder Eiswürfel, in die entstandene Kammer 6 eingebracht. Dies kann entweder alleine durch die Gewichtskraft des löslichen Materials 4 oder aber zusätzlich durch die Unterstützung von Druckluft erfolgen.

In einem optional nachfolgenden Prozessschritt V3 wird das wasserlösliche Material 4 durch das Auf- und Abbewegen des Bodenverdrängers 1 in das Erdreich 3 gedrückt bzw. gestopft und gegebenenfalls unter der Zufuhr weiteren wasserlöslichen Materials 4 verdichtet. Das wasserlösliche Material 4 bildet am Boden des Gründungsloches 2 einen stabilen Körper 5, auf dem ein darauf herzustellendes Bauelemente 8 temporär abgestützt bzw. positioniert werden kann. Insofern kann das wasserlösliche Material 4 in diesem Zustand auch als Stützkörper oder Positionierungselement 5 bezeichnet werden. Durch das Verdichten kommt es zu einem Aufweiten der Kammer 6 in einer Richtung senkrecht zu der Bewegung des Bodenverdrängers 1, sodass eine geweitete Kammer 6' entsteht, die von dem Positionierungselement 5 vollständig ausgefüllt ist. Durch die Aufweitung weist die geweitete Kammer 6' eine Breite B2' auf, die größer ist als die Breite B2 das Gründungslochs 2, und gleichzeitig die Breite des Positionierungselementes 5 darstellt. Die geweitete Kammer 6' bzw. das Positionierungselement 5 weist zudem die Ist-Füllhöhe H1' auf, die je nach Ausgestaltung des Verdichtens ebenfalls von der Soll-Füllhöhe H1 abweichen oder aber mit der Soll-Füllhöhe H1 gleich sein kann.

In dem nachfolgenden Prozessschritt V4 wird der Bodenverdränger 1 angehoben, in den so entstehenden Hohlraum oberhalb des wasserlöslichen Materials 4 wird durch die zuvor erwähnte Schleuse am Kopf des Bodenverdrängers 1 das Gründungsmaterial 7 des herzustellenden Bauelementes 8, beispielsweise Zement, Beton, Mörtel, Schotter und/oder Kies, in das Gründungsloch 2 auf dem wasserlöslichen Material 4 bzw. dem Stützkörper 5 eingebracht und das Gründungsmaterial 7 durch Auf- und AbBewegen des Bodenverdrängers 1 verdichtet. Das Vorgehen wird so lange wiederholt bis das Gründungsloch 2 bis zu einer Sollhöhe H2, in dem vorliegenden Fall bis zur Erdoberfläche, mit dem Gründungsmaterial 7 gefüllt und das Bauelement 8 ausgebildet ist. Dabei kommt es zu einem mantelförmigen Reibkontakt des Gründungsmaterials 7 beziehungsweise des hieraus gebildeten Bauelements 8 mit dem anstehenden Erdreich. Das Bauelement 8 weist dabei am unteren Ende, dem Fuß, eine Breite B3 auf, die im vorliegenden Fall weitgehend der Breite B2 des Gründungslochs 2 entspricht. Es ist allerdings auch denkbar, dass die Breite B3 auf Grund des Stopfens des Gründungsmaterials größer ist als die ursprüngliche Breite B2 des Gründungslochs 2. Die Breite B3 am Fuß des Bauelementes 8 ist im vorliegenden Fall kleiner als die Breite B2' des Positionierungselementes 5 bzw. der hiervon ausgefüllten Kammer 6'. Somit ist sichergestellt, dass das Bauelement 8 an dem unteren Ende vollständig auf dem wasserlöslichen Material 4 aufliegt. Denkbar ist allerdings auch, dass die Breite B3 am Fuß des Bauelementes 8 gleich der Breite B2' des Positionierungselementes 5 bzw. der hiervon ausgefüllten Kammer 6' ist.

Nachfolgend wird in dem Prozessschritt V5 eine Ruhezeit eingehalten, bevor das Bauelement 8 eine signifikante äußere Belastung erfährt. Hiermit ist insbesondere gemeint, dass das Bauelement 8 mit weniger als 10 % seiner Tragfähigkeit belastet wird. In dieser Zeit wird durch den Feuchtegehalt des Erdreiches 3 im Bereich der geweiteten Kammer 6' das wasserlösliche Material 4 bzw. der Stützkörper 5 nach und nach gelöst. Die Ruhezeit wird dabei so gewählt, dass sich an dem Ende der Ruhezeit das wasserlösliche Material 4 so gelöst hat, im vorliegenden Fall vollständig gelöst hat, dass ein Hohlraum unterhalb des Bauelementes 8 gebildet ist.

In einem abschließenden Prozessschritt V6 kann dann das Bauelement 8 mit einer Kraft F beaufschlagt werden, wobei das Bauelement 8 nur durch die Mantelreibung zwischen der Mantelfläche des Bauelementes 8 und dem Erdreich 3 getragen wird. Ein Spitzendruck kann auf Grund der zumindest teilweise leeren Kammer 6' unterhalb des Bauelementes 8 der Kraft F nicht entgegen wirken. Die Kraft F kann beispielsweise durch eine Konstruktion beziehungsweise ein Gebäude, insbesondere einen Hochbau, das von dem Bauelement getragen werden soll, resultieren oder aber für Tragfähigkeitsuntersuchung des Bauelements, insbesondere der Mantelreibung, mechanisch oder hydraulisch aufgebracht werden.

Alternativ kann das Tiefenrüttelverfahren derart ausgestaltet sein, dass der Verfahrensschritt V3 mit dem Verdichten des wasserlöslichen Materials 4 und das Verdichten des Gründungsmaterials 7 in Verfahrensschritt 4a entfallen.

Durch den Entfall des Verdichtens des wasserlöslichen Materials 4 in und des Gründungsmaterials 7 kann das alternative Tiefenrüttelverfahren für die zeiteffiziente Herstellung einfacher Bauelemente verwendet werden. Durch das fehlende Verdichten des wasserlöslichen Materials 4 entspricht die Breite B3 am Fuß des Bauelementes 8 der Breite B2 des wasserlöslichen Materials 4 bzw. des nach dem Auflösen hierdurch gebildeten Hohlraums. Damit die Belastung von der Gewichtskraft des Bauelementes 8 auf das wasserlösliche Material 4, insbesondere direkt nach dem Einfüllen des Gründungsmaterials 7 in das Gründungsloch 2, nicht zu einem ungewollten hohen Verdichten des wasserlöslichen Materials 4 und einem Absacken des Bauelementes 8 führt, kann die Beschaffenheit des wasserlöslichen Materials 4 derart gewählt werden, dass schon mit dem Einfüllen des wasserlöslichen Materials 4 eine hohe Schüttdichte des wasserlöslichen Materials 4 erreicht wird. Dies kann beispielsweise durch eine feine Körnung und durch hohe Rieselfähigkeit des wasserlöslichen Materials 4 erreicht werden.

In den Figuren 2A bis 2E, die im Folgenden gemeinsam beschrieben werden, wird eine zweite Ausführungsform des erfindungsgemäßen Verfahrens zur Herstellung eines spitzendruckfreien Bauelementes gezeigt. In einem ersten Prozessschritt V1a wird ein Vortriebsrohr 12 mit einer Breite B5 bis zu einer Solltiefe T1 in das Erdreich 3 eingerammt, eingebohrt, eingedreht oder eingepresst, sodass ein Gründungsloch 2 gebildet wird, dass eine Breite B2 aufweist. In einem nachfolgenden Prozessschritt V2a wird durch die Seele des Vortriebsrohres 12 das wasserlösliche Material 4 über eine nicht dargestellte Schleuse des Vortriebsrohres 12 in das Gründungsloch 2 eingefüllt und das Vortriebsrohr 12 aus dem Erdreich 3 um einen bestimmten Weg herausgezogen. Nachdem das wasserlösliche Material 4 bis zu einer Füllhöhe H1 eingebracht wurde, wird in einem weiteren Prozessschritt V4a durch die Seele des Vortriebsrohres 12 das Gründungsmaterial 7 in das Gründungsloch 2 eingefüllt und das Vortriebsrohr 12 aus dem Erdreich 3 weiter herausgezogen. Nach dem Erreichen der Sollhöhe H2 wird das Vortriebsrohr 12 aus dem Gründungsloch 2 vollständig entfernt. Aus dem eingebrachten Gründungsmaterial 7 wird somit das Bauelement 8 gebildet, dass eine Breite B3 aufweist, die gleich der Breite B2 des Gründungslochs 2 ist. In einem nachfolgenden Prozessschritt V5 folgt analog zu der ersten Ausgestaltung des erfindungsgemäßen Verfahrens eine Ruhezeit, bevor das Bauelement 8 eine signifikante Belastung erfährt. Abschließend kann in einem Verfahrensschritt V6, wie schon zuvor erläutert, das Bauelement 8 mit einer Kraft F belastet werden.

In den Figuren 3A bis 3F, die im Folgenden gemeinsam beschrieben werden, ist eine dritte Ausführungsform des erfindungsgemäßen Verfahrens für die Herstellung eines spitzendruckfreien Bauelementes dargestellt. In dem Verfahrensschritt V1b wird mittels eines Bohrwerkzeuges 9 mit der Breite B4 ein Gründungsloch 2 mit einer Breite B2 in das Erdreich 3 bis zu einer Solltiefe T1 gebohrt. Bei Verwendung eines Bohrverfahrens können die Breite B2 und die Breite B4 identisch sein, das heißt es kommt zu keiner signifikanten Verdrängung des Erdreiches sondern Material wird aus dem Erdreich herausgefördert. Dies gilt aber nicht für ein sogenanntes Teilverdrängungsbohrverfahren, bei dem es aufgrund des größeren Seelenrohres zu einer bestimmten seitlichen Verdrängung des anstehenden Bodens kommt. Parallel zu dem Bohrvorgang wird ein Stützrohr 10 bis unterhalb einer Soll-Füllhöhe H1 vom Boden des Gründungslochs 2 in das Gründungsloch 2 eingeführt. Das Stützrohr 10 verhindert, dass während des Einbringens des wasserlöslichen Materials 4 und des Gründungsmaterials 7 in das Gründungsloch 2 die Mantelfläche des Gründungslochs 2 beschädigt wird, insbesondere Erdreich mit in das Gründungsloch 2 gerissen wird. Es ist auch denkbar, dass auf ein derartiges Stützrohr 10 verzichtet wird. Hierbei kann entweder vollständig auf eine Abstützung des Gründungsloches 2 verzichtet werden oder aber anstelle des Stützrohres 10 eine Stützflüssigkeit in das Gründungsloch 2 eingebracht werden. In einem nachgelagerten Verfahrensschritt V1b' wird das Bohrwerkzeug 9 aus dem Gründungsloch 2 herausgezogen und entfernt. Das Stützrohr 10 verbleibt zunächst in dem Gründungsloch 2.

Nachfolgend wird in dem Verfahrensschritt V2b ein Schüttrohr 11 in das Gründungsloch 2 eingeführt, das am oberen Ende ein Trichterelement aufweist, das in einem Führungsrohr mündet, welches einen kleineren Durchmesser als die Breite B2 das Gründungslochs 2 aufweist. Durch das Schüttrohr 11 wird das wasserlösliche Material 4 bis zu der Soll-Füllhöhe H1 eingefüllt. Es ist allerdings auch denkbar, dass auf das Schüttrohr 11 verzichtet wird und stattdessen das wasserlösliche Material 4 direkt von dem oberen Rand des Gründungslochs 2 in das Gründungsloch 2 geschüttet wird. Nachfolgend wird in Verfahrensschritt V4b das Gründungsmaterial 7 oberhalb des wasserlöslichen Materials 4 in das Gründungsloch 2 über das Schüttrohr 11 eingebracht, bis die gewünschte Sollhöhe H2 oberhalb des wasserlöslichen Materials 4 erreicht wird. Das Stützrohr 10 und das Schüttrohr 11 werden dabei stetig aus dem Gründungsloch 2 herausgezogen. Dies kann entweder parallel oder sequenziell erfolgen, wobei das Stützrohr 10 stets unterhalb einer aktuellen Füllhöhe geführt werden kann. Erfolgt das Einbringen des Gründungsmaterials 7 oberhalb des Grundwasserspiegels, so kann das Schüttrohr 11 stets oberhalb des eingefüllten Gründungsmaterials 7 geführt werden. Erfolgt das Einbringen des Gründungsmaterials 7 unterhalb des Grundwasserspiegels, so kann als Schüttrohr 11 ein Kontraktrohr verwendet werden und so geführt werden, dass der Auslass des Kontraktrohres stets in dem Gründungsmaterial 7 eingetaucht ist. Hiermit wird erreicht, dass es zu keiner Durchmischung des Gründungsmaterials 7 mit dem Grundwasser beziehungsweise Stützflüssigkeit kommt. Es ist allerdings auch denkbar, dass auf ein Schüttrohr 11 verzichtet wird und stattdessen das Gründungsmaterial 7 direkt von dem oberen Rand des Gründungslochs 2 in das Gründungsloch 2 geschüttet wird.

In einem Verfahrensschritt V5 werden das Stützrohr 10 und das Schüttrohr 11 aus dem Gründungsloch 2 entfernt und analog zu der Vorgehensweise der zuvor beiden genannten Ausführungsformen des erfindungsgemäßen Verfahrens eine Ruhezeit eingehalten, bevor das Bauelement 8 eine signifikante äußere Belastung erfährt. Abschließend kann in einem Verfahrensschritt V6, wie schon zuvor erläutert, das Bauelement 8 mit einer Kraft F belastet werden.

In den Figuren 4A bis 4F, die im Folgenden gemeinsam beschrieben werden, wird eine vierte Ausführungsform des erfindungsgemäßen Verfahrens zur Herstellung eines spitzendruckfreien Bauelementes gezeigt, das weitgehend der oben beschriebenen zweiten Ausführungsform des erfindungsgemäßen Verfahrens gleicht.

In Abwandlung gegenüber der zweiten Ausführungsform wird in der vierten Ausführungsform ein lösliches Positionierungselement 5' in den Boden eingebracht, derart, dass eine erste Schicht 13 und eine zweite Schicht 14 des wasserlöslichen Materials 4 durch eine wasserdurchlässige Zwischenschicht 15 voneinander getrennt sind. In einem ersten Prozessschritt, der in den Figuren nicht dargestellt ist, wird analog zu dem ersten Prozessschritt V1a der zweiten Ausführungsform des erfindungsgemäßen Verfahrens ein Vortriebsrohr 12 in das Erdreich 3 eingerammt, eingebohrt, eingedreht oder eingepresst, sodass ein Gründungsloch 2 gebildet wird. Abkürzend wird daher an dieser Stelle auf die Ausführungen zu dem Prozess V1a verwiesen.

In einem nachfolgenden Prozessschritt V2c, der in den Figuren 4A), 4B) und 4C) durch die Teilprozessschritte V2', V2c'" und V2c'" repräsentiert ist, wird zunächst die erste Schicht 13 des wasserlöslichen Materials über eine nicht dargestellte Schleuse des Vortriebsrohres 12 in das Gründungsloch 2 eingefüllt und das Vortriebsrohr 12 aus dem Erdreich 3 stückweise herausgezogen. Nachfolgend wird auf die erste Schicht 13 des wasserlöslichen Materials 4 eine wasserdurchlässige Zwischenschicht 15 eingebracht, die auch als Einlage bezeichnet werden kann. Die Einlage 15 kann ein grobkerniges Material aufweisen, wie beispielsweise Kies oder Schotter, wobei die Verwendung von Eiswürfeln ebenso möglich ist. Dabei ist es unerheblich, ob das Material der Einlage selbst löslich ist, oder nicht. Nachfolgend wird auf die Einlage 15 eine zweite Schicht 14 des wasserlöslichen Materials 4 eingebracht. Die erste Schicht 13 und die zweite Schicht 14 des wasserlöslichen Materials bilden zusammen mit der wasserdurchlässigen Einlage 15 ein Positionierungselement 5', das von einem Boden des Gründunglochs 2 bis zu einer Füllhöhe H1 reicht.

Nachfolgend wird in einem weiteren Prozessschritt V4c durch die Seele des Vortriebsrohres 12 das Gründungsmaterial 7 in das Gründungsloch 2 eingefüllt und das Vortriebsrohr 12 aus dem Erdreich 3 weiter herausgezogen. Nach dem Erreichen der Sollhöhe H2 wird das Vortriebsrohr 12 aus dem Gründungsloch 2 vollständig entfernt. Aus dem eingebrachten Gründungsmaterial 7 wird somit das Bauelement 8 gebildet, dass eine Breite B3 aufweist, die bei der vorliegenden Ausführung gleich der Breite B2 des Gründungslochs 2 ist.

In einem nachfolgenden Prozessschritt V5c folgt analog zu dem Prozessschritt V5 der ersten Ausgestaltung des erfindungsgemäßen Verfahrens eine Ruhezeit, bevor das Bauelement 8 eine signifikante Belastung erfährt. Hierbei kann die Ruhezeit gegenüber der zweiten Ausgestaltung des erfindungsgemäßen Verfahrens reduziert werden, da Grundwasser durch die wasserdurchlässige Einlage 15 hindurchtreten kann und die beiden Schichten 13, 14 des wasserlöslichen Materials 4 jeweils von mehreren Seiten hydriert werden, sodass sich das wasserlösliche Material 4 schneller auflösen kann. Nach dem Auflösen des wasserlöslichen Materials 4 setzt sich die wasserdurchlässige Einlage 15 im Bodenbereich des Gründungsloches 2 ab, sodass die Pfahlspitze des Bauelements 8 freigegeben ist. Abschließend kann in einem Verfahrensschritt V6, wie schon zuvor erläutert, das Bauelement 8 mit einer Kraft F belastet werden.

Es versteht sich, dass ein mehrschichtiges Positionierungselement gemäß der vorliegenden Ausführung nach Figur 4 auch bei den erfindungsgemäßen Verfahren gemäß den Figuren 1 bis 3, insbesondere mit einem Bohrwerkzeug, einem Bodenverdrängerwerkzeug oder deren Kombination, analog verwendet werden kann.

### Bezugszeichenliste

- 1: Bodenverdränger
- 2: Gründungsloch
- 3: Erdreich
- 4: wasserlösliches Material
- 5: Positionierungselement
- 6, 6': Kammer
- 7: Gründungsmaterial
- 8: Bauelement
- 9: Bohrwerkzeug
- 10: Stützrohr
- 11: Schüttrohr
- 12: Vortriebsrohr
- 13: erste Schicht (4)
- 14: zweite Schicht (4)
- 15: Zwischenschicht

- B: Breite
- H: Höhe
- T: Tiefe

## Patentansprüche

1. Verfahren zur Herstellung eines Tiefgründungselements (8) beinhaltend folgende Schritte:
Einbringen eines wasserlöslichen Materials (4) in ein Erdreich (3) und
Einbringen eines Tiefgründungselements (8) in das Erdreich auf dem wasserlöslichen Material (4), wobei das Tiefgründungselement nach dem Einbringen temporär auf dem wasserlöslichen Material nach unten abgestützt und durch
Lösen des wasserlöslichen Materials nur noch durch die Mantelreibung getragen und am unteren Ende spitzendruckfrei wird.

2. Verfahren nach Anspruch 1,
**dadurch gekennzeichnet,**
**dass** als wasserlösliches Material (4) ein Material mit einer Löslichkeit in Wasser von zumindest 33g/l Wasser, insbesondere von zumindest 100g/l Wasser, gewählt wird.

3. Verfahren nach einem der Ansprüche 1 oder 2,
**dadurch gekennzeichnet,**
**dass** nach dem Einbringen des Tiefgründungselementes (8) eine Ruhezeit eingehalten wird, bevor das Tiefgründungselement (8) eine signifikante äußere Belastung (F) erfährt, wobei sich das wasserlösliche Material (4) während der Ruhezeit zumindest teilweise auflöst, sodass unter dem Tiefgründungselement (8) ein Hohlraum entsteht.

4. Verfahren nach Anspruch 3,
**dadurch gekennzeichnet,**
**dass** als Ruhezeit zumindest 4 Tage, insbesondere zumindest 10 Tage, insbesondere zumindest 20 Tage, gewählt werden.

5. Verfahren nach einem der Ansprüche 1 bis 4,
**dadurch gekennzeichnet,**
**dass** ein Gründungsloch (2) in das Erdreich (3) eingearbeitet wird und, dass das wasserlösliche Material (4) als ein wasserlösliches Positionierungselement (5) von einem Boden des Gründungsloches (2) bis zu einer Sollfüllhöhe (H1) eingefüllt wird.

6. Verfahren nach einem der Ansprüche 1 bis 5,
**dadurch gekennzeichnet,**
**dass** vor oder während des Einbringens des Tiefgründungselementes (8) das wasserlösliche Material (4) verdichtet wird, insbesondere derart, dass die Festigkeit und/oder die Steifigkeit des wasserlöslichen Materials (4) zumindest dem Produkt aus der Höhe (H2) des Tiefgründungselementes (8) und dem spezifischen Gewicht des Tiefgründungselementes (8) unmittelbar nach dem Einbringen des Tiefgründungselementes (8) entspricht.

7. Verfahren nach Anspruch 6,
**dadurch gekennzeichnet,**
**dass** das wasserlösliche Material (4) derart verdichtet wird, dass eine Breite (B2') des wasserlöslichen Materials (4) gleich oder größer ist als eine Breite (B3) des darauf zu erstellenden Tiefgründungselementes (8) und, dass eine Höhe (H1') des wasserlöslichen Materials (4) maximal der einfachen Breite (B3) des Tiefgründungselementes (8), insbesondere maximal der halben Breite (B3) des Tiefgründungselementes (8), entspricht.

8. Verfahren nach einem der Ansprüche 1 bis 7,
**dadurch gekennzeichnet,**
**dass** das wasserlösliche Material (4) aus der Gruppe der Salze, der Gruppe der Zuckerarten oder der Gruppe der Säuren gewählt wird und/oder dass das wasserlösliche Material (4) zumindest eines von Zellstoff und einer gefrorenen Flüssigkeit enthält.

9. Verfahren nach einem der Ansprüche 1 bis 8,
**dadurch gekennzeichnet,**
**dass** das wasserlösliche Material (4) in mehreren Schichten eingebracht wird, wobei auf eine Schicht (13, 14) mit wasserlöslichem Material eine Zwischenschicht (15) aus flüssigkeitsdurchlässigem, insbesondere rolligem Material eingebracht wird.

10. Verfahren nach einem der Ansprüche 1 bis 9,
**dadurch gekennzeichnet,**
**dass** dem wasserlöslichen Material (4) zumindest eines der Mikroelemente Zink, Mangan, Eisen, Selen und Kupfer beigemengt wird.

11. Verfahren nach einem der Ansprüche 1 bis 10,
**dadurch gekennzeichnet,**
**dass** als wasserlösliches Material (4) ein Material, das im vollständig in Wasser gelösten Zustand einen pH-Wert von zumindest 6,0, insbesondere von zumindest 6,5, insbesondere von zumindest 6,8, und maximal 8,0, insbesondere maximal 7,5, insbesondere maximal 7,2, aufweist, gewählt wird.

12. Verfahren nach einem der Ansprüche 1 bis 11,
**dadurch gekennzeichnet,**
**dass** dem wasserlöslichen Material (4) vor oder nach dem Einbringen des Tiefgründungselementes (8) eine Flüssigkeit beigemengt wird, insbesondere derart, dass Hohlräume des wasserlöslichen Materials (4) mit der Flüssigkeit ausgefüllt werden.

13. Verfahren nach einem der Ansprüche 1 bis 12,
**dadurch gekennzeichnet,**
**dass** das Einbringen des wasserlöslichen Materials (4) in das Erdreich (3) und das Einbringen des Tiefgründungselementes (8) auf dem wasserlöslichen Material (4) durch ein Tiefen- oder Aufsatzrüttelverfahren, durch ein Vortriebsrohrverfahren oder in ein durch ein Bohrverfahren erzeugtes Bohrloch erfolgt.

14. Verfahren nach einem der Ansprüche 1 bis 13,
**dadurch gekennzeichnet,**
**dass** nach dem Einbringen des Tiefgründungselementes (8) die Mantelreibung des Tiefgründungselementes (8) bestimmt wird.

15. Verfahren nach Anspruch 14,
**dadurch gekennzeichnet,**
**dass** neben dem Tiefgründungselement (8) ein weiteres Tiefgründungselement in das Erdreich (3) eingebracht wird, wobei das weitere Tiefgründungselement gleiche Abmessungen wie das Tiefgründungselement (8) aufweist und derart in das Erdreich (3) eingebracht wird, dass von dem Erdreich (3) ein Spitzendruck auf das weitere Tiefgründungselement wirkt; und
**dass** nach dem Einbringen des weiteren Tiefgründungselementes der Gesamtwiderstand des weiteren Tiefgründungselementes bestimmt wird, und dass aus dem Gesamtwiderstand des weiteren Tiefgründungselementes und der Mantelreibung des Tiefgründungselementes der Spitzendruckwiderstand des weiteren Tiefgründungselementes ermittelt wird.

## Claims

1. Method of producing a deep foundation element,
**characterised by** the steps:
placing a water-soluble material (4) into a ground (3) and
introducing a deep foundation element (8) into the ground on the water-soluble material (4), wherein after introducing the deep foundation element is temporarily supported downwards on the water-soluble material and becomes free of peak pressure by dissolving of the water-soluble material.

2. Method according to claim 1,
**characterised in**
**that** a material with a solubility in water of at least 33 g/l of water, in particular of at least 100 g/l of water, is selected as the water-soluble material (4).

3. Method according to one of claims 1 or 2,
**characterised in**
**that** after the introduction of the deep foundation element (8), a rest period is observed before the deep foundation element (8) is subjected to a significant external load (F), wherein the water-soluble material (4) at least partially dissolves during the rest period so that a cavity is formed under the deep foundation element (8).

4. Method according to claim 3,
**characterised in**
**that** at least 4 days, in particular at least 10 days, in particular at least 20 days, are selected as the rest period.

5. Method according to any one of claims 1 to 4,
**characterised in**
**that** a foundation hole (2) is made in the ground (3) and,
**that** the water-soluble material (4) is filled in as a water-soluble positioning element (5) from a bottom of the foundation hole (2) to a target filling height (H1).

6. Method according to any one of claims 1 to 5,
**characterised in**
**that** before or during the introduction of the deep foundation element (8), the water-soluble material (4) is compacted, in particular in such a way that the strength and/or the rigidity of the water-soluble material (4) corresponds at least to the product of the height (H2) of the deep foundation element (8) and the specific weight of the deep foundation element (8) immediately after the introduction of the deep foundation element (8).

7. Method according to claim 6,
**characterised in**
**that** the water-soluble material (4) is compacted in such a way that a width (B2') of the water-soluble material (4) is equal to or greater than a width (B3) of the deep foundation element (8) to be provided thereon, and in that a height (H1') of the water-soluble material (4) corresponds at most to the single width (B3) of the deep foundation element (8), in particular at most to half the width (B3) of the deep foundation element (8).

8. A method according to any one of claims 1 to 7,
**characterised in**
**that** the water-soluble material (4) is selected from the group of salts, the group of sugars or the group of acids and/or
**that** the water-soluble material (4) contains at least one of cellulose and a frozen liquid.

9. Method according to any one of claims 1 to 8,
**characterised in**
**that** the water-soluble material (4) is introduced in a plurality of layers, wherein an intermediate layer (15) of liquid-permeable, in particular rollable material is introduced onto a layer (13, 14) with water-soluble material.

10. Method according to any one of claims 1 to 9,
**characterised in**
**that** at least one of the microelements zinc, manganese, iron, selenium and copper is added to the water-soluble material (4).

11. Method according to any one of claims 1 to 10,
**characterised in**
**that** the water-soluble material (4) selected is a material which, in the completely water-dissolved state, has a pH value of at least 6.0, in particular of at least 6.5, in particular of at least 6.8, and at most 8.0, in particular at most 7.5, in particular at most 7.2.

12. Method according to any one of claims 1 to 11,
**characterised in**
**that** before or after the introduction of the deep foundation element (8), a liquid is added to the water-soluble material (4), in particular in such a way that cavities of the water-soluble material (4) are filled with the liquid.

13. Method according to any one of claims 1 to 12,
**characterised in**
**that** the introduction of the water-soluble material (4) into the ground (3) and the introduction of the deep foundation element (8) onto the water-soluble material (4) is carried out by a deep or top vibrating method, by a jacking pipe method or into a borehole produced by a drilling method.

14. Method according to any one of claims 1 to 14,
**characterised in**
**that** after the deep foundation element (8) has been introduced, the skin friction of the deep foundation element (8) is determined.

15. Method according to claim 14,
**characterised in**
**that**, in addition to the deep foundation element (8), a further deep foundation element is introduced into the ground (3), with the further deep foundation element having the same dimensions as the deep foundation element (8) and being introduced into the ground (3) in such a way that a peak pressure acts from the ground (3) on the further deep foundation element; and
**that**, after the further deep foundation element has been introduced, the total resistance of the further deep foundation element is determined, and
**that** the peak pressure resistance of the further deep foundation element is determined from the total resistance of the further deep foundation element and the skin friction of the deep foundation element.

## Revendications

1. Procédé de fabrication d'un élément de fondation (8) comprenant les étapes suivantes :
introduction d'un matériau soluble dans l'eau (4) dans un sol (3) et
introduction d'un élément de fondation (8) dans le sol sur le matériau soluble dans l'eau (4), l'élément de fondation étant temporairement soutenu par en dessous par le matériau soluble dans l'eau après l'introduction et, en raison de la dissolution du matériau soluble dans l'eau, porté seulement par le frottement superficiel et libéré de la pression de pointe à l'extrémité inférieure.

2. Procédé selon la revendication 1,
**caractérisé en ce que**
le matériau soluble dans l'eau (4) sélectionné est un matériau avec une solubilité dans l'eau d'au moins 33 g/l d'eau, en particulier d'au moins 100 g/l d'eau.

3. Procédé selon l'une des revendications 1 à 2,
**caractérisé en ce que**
après l'introduction de l'élément de fondation (8), un temps de repos est respecté, avant la soumission de l'élément de fondation (8) à une charge extérieure significative (F), le matériau soluble dans l'eau (4) se dissolvant au moins partiellement pendant le temps de repos, de sorte qu'un espace creux se forme sous l'élément de fondation (8).

4. Procédé selon la revendication 3,
**caractérisé en ce que**
le temps de repos sélectionné s'étend sur au moins 4 jours, en particulier sur au moins 10 jours, en particulier sur au moins 20 jours.

5. Procédé selon l'une des revendications 1 à 4,
**caractérisé en ce que**
un trou de fondation (2) est réalisé dans le sol (3) et **en ce que** le matériau soluble dans l'eau (4) est introduit en tant qu'élément de positionnement soluble dans l'eau (5) à partir d'un fond du trou de fondation (2) jusqu'à un niveau de remplissage de consigne (H1).

6. Procédé selon l'une des revendications 1 à 5,
**caractérisé en ce que**
le matériau soluble dans l'eau (4) est compacté avant ou pendant l'introduction de l'élément de fondation (8), en particulier de telle façon que la résistance et/ou la rigidité du matériau soluble dans l'eau (4) correspond(ent) au moins au produit de la hauteur (H2) de l'élément de fondation (8) et du poids spécifique de l'élément de fondation (8) immédiatement après l'introduction de l'élément de fondation (8).

7. Procédé selon la revendication 6,
**caractérisé en ce que**
le matériau soluble dans l'eau (4) est compacté de telle façon qu'une largeur (B2') du matériau soluble dans l'eau (4) est égale ou supérieure à une largeur (B3) de l'élément de fondation (8) à ériger sur celui-ci, et qu'une hauteur (Hl') du matériau soluble dans l'eau (4) correspond au maximum à la largeur (B3) simple de l'élément de fondation (8), en particulier au maximum à la moitié de la largeur (B3) de l'élément de fondation (8) .

8. Procédé selon l'une des revendications 1 à 7,
**caractérisé en ce que**
le matériau soluble dans l'eau (4) est sélectionné parmi le groupe des sels, le groupe des types de sucre ou le groupe des acides et/ou **en ce que**
le matériau soluble dans l'eau (4) contient l'un au moins parmi la cellulose et un liquide congelé.

9. Procédé selon l'une des revendications 1 à 8,
**caractérisé en ce que**
le matériau soluble dans l'eau (4) est introduit en plusieurs couches, où une couche intermédiaire (15) constituée d'un matériau perméable à l'eau, en particulier un matériau roulant, est introduite sur une couche (13, 14) avec du matériau soluble dans l'eau.

10. Procédé selon l'une des revendications 1 à 9,
**caractérisé en ce que**
l'un au moins parmi les microéléments zinc, manganèse, fer, sélénium et cuivre est ajouté au matériau soluble dans l'eau (4).

11. Procédé selon l'une des revendications 1 à 10,
**caractérisé en ce que**
le matériau soluble dans l'eau (4) sélectionné est un matériau présentant une valeur de pH d'au moins 6,0, en particulier d'au moins 6,5, en particulier d'au moins 6,8, et au maximum de 8,0, en particulier au maximum de 7,5, en particulier au maximum de 7,2, dans l'état complètement dissolu dans l'eau.

12. Procédé selon l'une des revendications 1 à 11,
**caractérisé en ce que**
un liquide est ajouté au matériau soluble dans l'eau (4) avant ou après l'introduction de l'élément de fondation (8), en particulier de telle façon que des espaces creux du matériau soluble dans l'eau (4) sont remplis avec le liquide.

13. Procédé selon l'une des revendications 1 à 12,
**caractérisé en ce que**
l'introduction du matériau soluble dans l'eau (4) dans le sol (3) et l'introduction de l'élément de fondation (8) sur le matériau soluble dans l'eau (4) sont effectuées à l'aide d'un procédé à vibrations, d'un procédé à tuyau de fonçage ou dans un trou de forage réalisé à l'aide d'un procédé de forage.

14. Procédé selon l'une des revendications 1 à 13,
**caractérisé en ce que**
le frottement superficiel de l'élément de fondation (8) est déterminé après l'introduction de l'élément de fondation (8).

15. Procédé selon la revendication 14,
**caractérisé en ce que**
un autre élément de fondation est introduit dans le sol (3) en plus de l'élément de fondation (8), l'autre élément de fondation présentant les mêmes dimensions que l'élément de fondation (8) et étant introduit de telle façon dans le sol (3), qu'une pression de pointe agit sur l'autre élément de fondation depuis le sol (3) ; et
la résistance totale de l'autre élément de fondation est déterminée après l'introduction de l'autre élément de fondation, et
la résistance à la pression de pointe de l'autre élément de fondation est déterminée à partir de la résistance totale de l'autre élément de fondation et du frottement superficiel de l'élément de fondation.
